# EUROPEAN PATENT APPLICATION

(11) **EP 1 728 453 A1**
(43) Date of publication of application: **06.12.2006**
(21) Application number: 05027087.5
(22) Date of filing: 12.12.2005
(51) Int. Cl.: A47B 81/04, A47J 47/16

(54) **Rack for storing containers**

(30) Priority: 02.06.2005 KR 2005047288
(71) Applicant: Hana Cobi Co., Ltd., Seocho-gu Seoul (KR)
(72) Inventor: Kim, Chang-Ho, Hana Cobi Building, Seocho-gu Seoul (KR)
(74) Representative: Müller-Boré & Partner Patentanwälte

(57) **Abstract**

A rack (1) for storing containers is disclosed. When storing empty food containers, a container body and a container lid are separated and stored. The lids of food containers are stacked in a lid storing box (3) that is opened and closed within a casing body like a drawer. The container bodies of the food containers are stacked and stored in a container storing member (5) formed at an upper side of the casing body, so that a large number of food containers can be stored in a shelf of a kitchen or a storing unit in safe.

## Description

### BACKGROUND OF THE INVENTION

### 1. Field of the Invention

The present invention relates to a rack for storing food containers that can be installed at a cooking stand of left and right sides of a kitchen sink or an upper side of a kitchen sink or a shelf or storing unit, and in particular to a rack for storing food containers that is implemented in such a manner that a container body and lid of a food container are separated, and container bodies are stacked for storage, and container lids are stacked for storage, so that a large number of food containers can be stored at a limited space.

### 2. Description of the Background Art

Generally, containers designed for storing foods are stored at a shelf or a storing unit installed above a kitchen sink in a common home.

Recently, a lid having a sealing function covers a container body to prevent a food smell from being spread into a space of a refrigerator when storing foods in a refrigerator.

The food container in which a sealing lid covers a container body has an excellent function of storing foods in a sealed state. However, when food containers are not in use, they are stored in an engaged state between a container body and a lid for thereby disadvantageously occupying the space of a shelf or storing unit a lot.

Namely, in a state that a lid is engaged with a container body, it is impossible to decrease the volume of a food container for thereby occupying the storing space a lot. In the case that a plurality of food containers are stacked by inserting into one another and are arranged from an inner side to an outer side in a storing unit, it is needed to sequentially take out the stacked containers from the outer one to the inner one, so that many inconvenience are caused.

### SUMMARY OF THE INVENTION

Accordingly, it is an object of the present invention to overcome the above-described problems encountered in the conventional art.

It is another object of the present invention to provide a rack for storing containers. When storing empty food containers, a container body and a container lid are separated and stored. The lids of food containers are stacked in a lid storing box that is opened and closed within a casing body like a drawer. The container bodies of the food containers are stacked and stored in a container storing member formed at an upper side of the casing body, so that a large number of food containers can be stored in a shelf of a kitchen or a storing unit in safe.

It is further another object of the present invention to provide a rack for storing containers in which when container bodies are stacked and stored in upside down shapes at the container storing member, the container bodies can be fixed for thereby storing a large number of container bodies in a stable state.

It is still further another object of the present invention to provide a rack for storing containers in which a desired container body can be easily taken out among the container bodies that are stacked and stored in upper and lower sides in multiple rows using a certain unit capable of rotating the container storing unit.

To achieve the above objects, there is provided a rack for storing food containers, comprising an empty casing body with an upper side and one side of the same being opened; a lid storing box that is slidably engaged at the casing body and is inserted or withdrawn into/from one opened side of the casing body like a drawer for storing the lids of the food containers; a casing lid body that opens and closes the lid storing box and covers an opened upper side of the casing body; and a container storing member that is engaged at an upper side of the casing lid body for storing at least one container body of the food container in a vertically stacked state and is formed in multiple rows.

In addition, inner and outer guide protrusions are protruded in parallel from both sides of a bottom upper surface of the casing body for forming a moving groove in a direction that the lid storing box is opened and closed; and a stopper protrusion is formed at a front end of the outer guide protrusion; a rail protrusion is protruded from both sides of a bottom lower surface of the lid storing box and is inserted between the inner and outer guide protrusions and slide along the moving groove; and an escape prevention protrusion that is protruded near a rear end of the rail protrusion and is engaged with the stopper protrusion.

The container storing member is rotatable on the casing lid body.

The container storing member is rotatably supported by a plurality of balls inserted into a retainer with equivalent angles and shapes installed at a fixture fixed at an upper surface of the casing lid.

The fixture is fixed by a plurality of engaging protrusions protruded upwards from an upper surface of a concave part in a state that a circular protrusion protruded from a lower side of the same is inserted in a horizontal shape between the inner and outer circular protrusions protruded upwards from the concave part formed downwards at the center of the casing lid body, and inner and outer circular protrusions are formed at an upper surface of the fixture for forming a retainer receiving circular groove for receiving the retainer.

A cylindrical part is protruded downwards from the center of a lower side of the container storing member, and a plurality of assembling protrusions are formed at a lower side of the cylindrical part and are rotatably inserted into an assembling hole formed at the center of the fixture, and a circular rotation member that is supported by a plurality of balls engaged at the retainer at a surrounding portion of the cylindrical part for thereby guiding a rotational operation of the container storing member.

The container fixtures formed in a pair are formed at an upper surface of the container storing member in multiple pairs symmetrically at an inner side of the entrance of the container body for thereby fixing the container bodies when the container bodies of the food containers are made upside down and are stored.

The container fixtures formed at an upper surface of the container storing member in multiple pairs are formed in a L-shape or an arc shape for effectively fixing the container bodies of the food containers having circular cross sections or rectangular sections.

An escape prevention protrusion is protruded from a lower side of the casing lid body for preventing a lid storing box from being escaped from the casing body when opening the lid storing box.

### BRIEF DESCRIPTION OF THE DRAWINGS

The present invention will become better understood with reference to the accompanying drawings which are given only by way of illustration and thus are not limitative of the present invention, wherein;
Figure 1 is a perspective view illustrating a rack according to the present invention;
Figure 2 is a disassembled perspective view illustrating a casing body and a lid storing tray of a rack according to the present invention;
Figure 3 is a disassembled perspective view illustrating a casing lid and a container storing member of a rack according to the present invention;
Figure 4 is a cross sectional view illustrating an assembled state of a rack according to the present invention;
Figure 5 is a perspective view illustrating a state of use according to the present invention; and
Figure 6 is a cross sectional view illustrating a state of use according to the present invention.

### DETAILED DESCRIPTION OF THE PREFERRED EMBODIMENTS

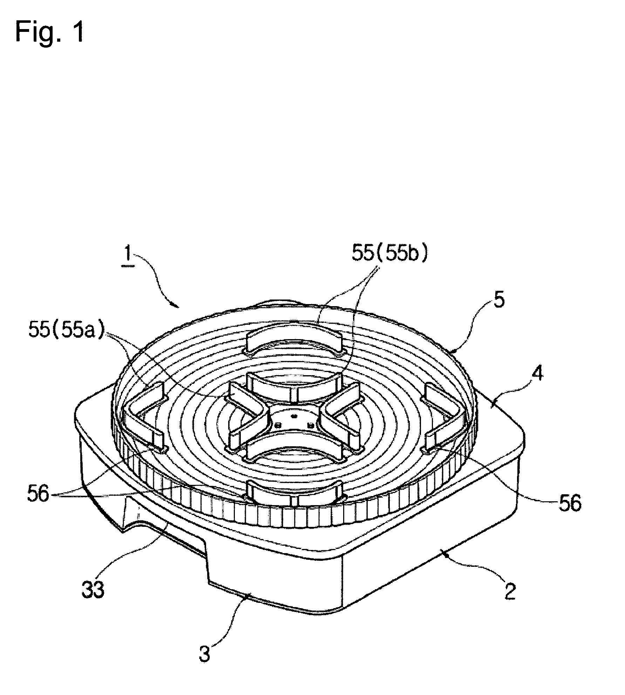

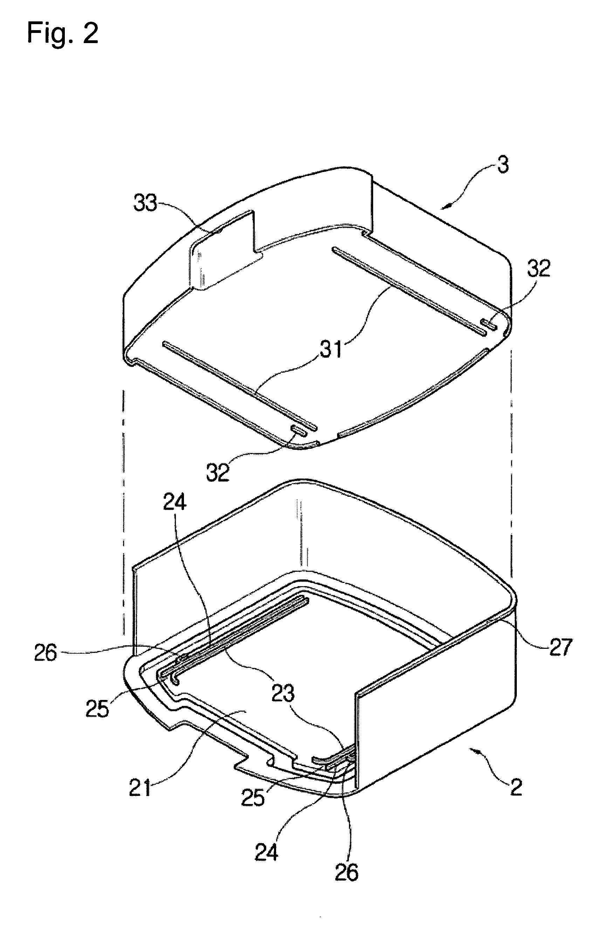

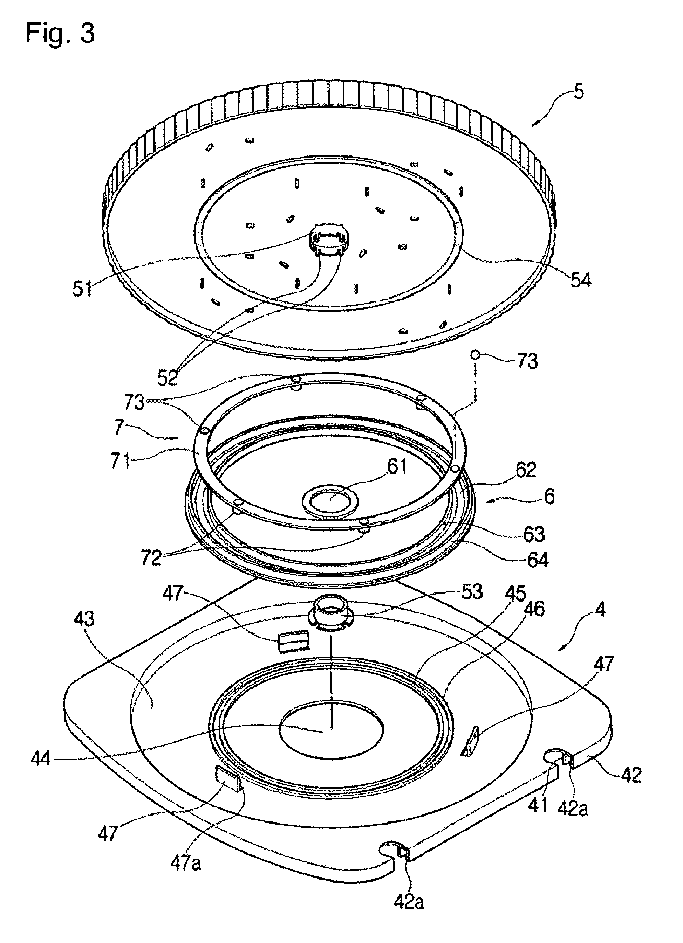

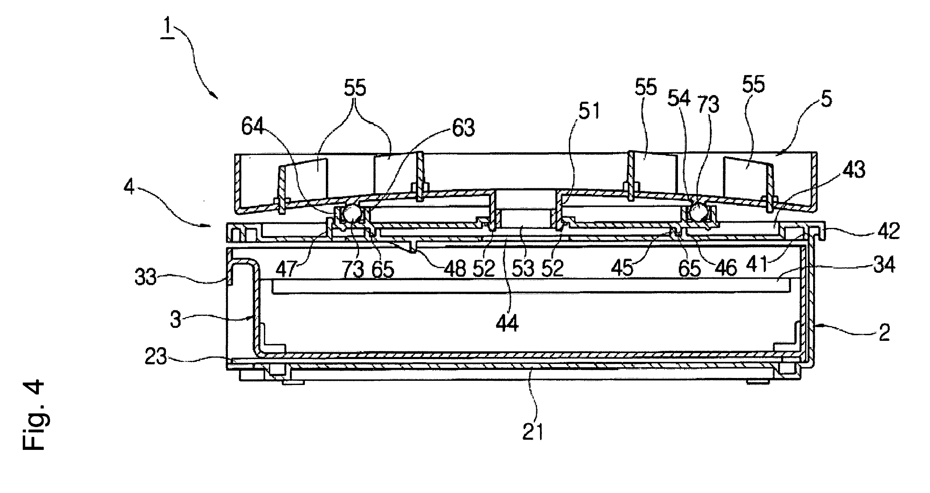

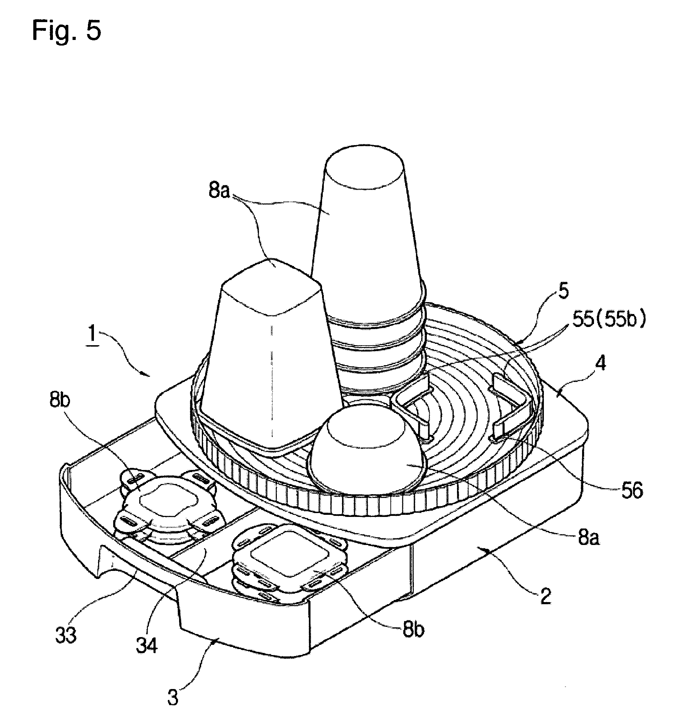

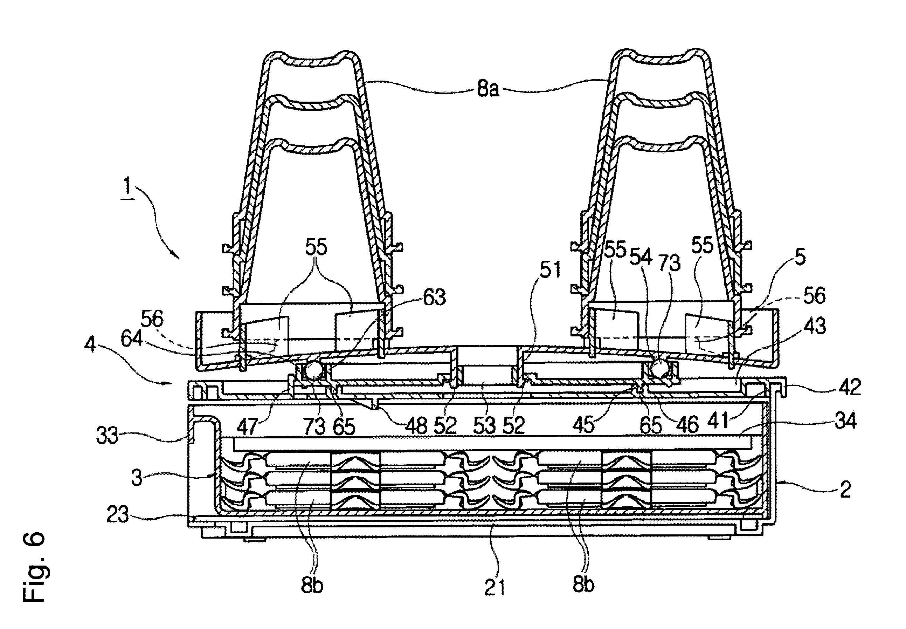

Figure 1 is a perspective view illustrating a rack according to the present invention; Figure 2 is a disassembled perspective view illustrating a casing body and a lid storing tray of a rack according to the present invention; Figure 3 is a disassembled perspective view illustrating a casing lid and a container storing member of a rack according to the present invention; Figure 4 is a cross sectional view illustrating an assembled state of a rack according to the present invention; Figure 5 is a perspective view illustrating a state of use according to the present invention; and Figure 6 is a cross sectional view illustrating a state of use according to the present invention.

In the drawings, reference numeral 1 represents a rack for storing food containers. The food container storing rack 1 includes an empty casing body 2 with a part of front side and upper side among front, rear, left and right sides being opened, a lid storing box 3 inserted or withdrawn into/from an interior of the casing body, a casing lid body 4 for covering an upper side of the casing body 2, and a container storing member 5 rotatably installed on the lid casing.

A protrusion support part 22 is formed at a surrounding portion of a bottom 21 of the casing body 2 and is protruded more downwards as compared to a lower side of the bottom 21 with an upper surface being concaved. Inner and outer guide protrusions 23 and 24 are formed at left and right sides of the bottom 21 with respect to the opened front side of the casing body 2 and are protruded in parallel forwards and backwards. A moving groove 25 is formed between the inner and outer guides 23 and 24. A stopper protrusion 26 is formed at each guide protrusion 24 of both sides. Here, the stopper protrusion 26 is formed near an opened front side of the casing body 2 so that it operates a function of controlling an opening degree for preventing a rear end of the lid storing box 3 from not being escaped from an opened end of the casing body 2.

Next, the lid storing box 3 is engaged so that it is inserted and withdrawn into/from the interior of the casing body 2 like a drawer. A rail protrusion 31 is formed at both lower ends of the lid storing box 4 and is slidably inserted into the moving groove 25 between the inner and outer guide protrusions 23 and 24 formed at both sides of the bottom 21 of the casing body 2. An escape prevention protrusion 32 is formed at a rear end of the rail protrusion 31 and is caught by the stopper protrusion 26 formed at the outer guide protrusion 24.

Therefore, when the lid storing box 3 is withdrawn from the casing body 2, the rail protrusions 31 of the lid storing box 3 slide outwards along the moving groove 25 of the casing body 2, and the escape prevention protrusion 32 formed at the rear end of the lid storing groove 3 is caught by the stopper protrusion 26, so that the lid storing groove 3 is opened in a state that it is not fully escaped from the casing body 2 with a part of the rear end of the same being inserted into the casing body 2.

Next, the casing lid body 4 is assembled with an opened upper side of the casing body 2 being covered by the casing lid body 4. Inner and outer assembling protrusion pieces 41 and 42 that are protruded downwards are assembled at a surrounding portion of the casing lid body 4 in a construction that an upper rim 27 of the casing body 2 is surrounded. As shown in Figure 3, an engaging protrusion 43 is formed at the outer assembling protrusion piece 42 at multiple portions and is protruded inwards and is elastically engaged with the upper rim 27. In the preferred embodiment of the present invention, the engaging protrusion 42a is formed at left and right sides of the casing lid body 4.

A fixture 6 and a retainer 7 are sequentially assembled at the casing lid body 4 for rotatably installing the container storing member 5.

In addition, a concave part 43 is formed at the casing lid body 4 with its diameter being larger than the fixture 6. An insertion hole 44 is formed at the center of the concave part 43. Inner and outer circular protrusions 45 and 46 are formed at a surrounding portion of the insertion hole 44. A plurality of engaging protrusions 47 are protruded from a surrounding portion of the outer circular protrusion 46. The engaging protrusions are formed with equivalent angles for elastically engaging a surrounding portion of the fixture 6. An engaging shoulder part 47a is formed at the engaging protrusion 47 for engaging the fixture 6.

Next, an assembling hole 61 is formed at the center of the fixture 6. Inner and outer circular protrusions 63 and 64 are protruded from a surrounding portion of the fixture 6 for forming a receiving groove 62 that receives the retainer 7. In addition, a circular protrusion 65 is protruded downwards from a lower side of the fixture 6 and is assembled between the inner and outer circular protrusions 45 and 46 of the casing lid body 4.

Here, the retainer 7 includes a circular plate member 71 inserted into the retained receiving groove 62 formed at the fixture 6, a plurality of ball receiving containers 72 protruded from a lower side of the same with equivalent angles and shapes, and a plurality of balls 73 rotatably inserted into the ball receiving containers 72. The upper and lower sides of the balls 73 are protruded from the upper surface of the circular plate member 71 and the lower end of each ball receiving container 72.

The container storing member 5 is rotatably installed on the casing lid body 4. A cylindrical part 51 is protruded downwards from a lower center of the container storing member 5 and has an outer diameter inserted into the assembling hole 61 of the fixture 6. A plurality of assembling protrusions 52 are formed at a lower surrounding portion of the cylindrical part 51 and are contracted to its original state by an elastic recovering force when they are inserted into the assembling hole 61 of the fixture 6 after they are passed through the assembling hole 61 and then are engaged by the assembling hole 61. The assembling protrusions 52 are not escaped from the assembling hole 61 and are rotatable therein.

The engaging part 53 is inserted into an inner side of the assembling protrusion 52 so that each assembling protrusion 52 of the cylindrical part 51 is not escaped from the assembling hole 61 for thereby preventing each assembling protrusion 52 from not being contracted.

A circular rotation member 54 having the same diameter as the retainer 7 is formed at a lower side of the supporting member 5. The circular rotation member 54 is supported on the upper sides of the balls 73 engaged at the retainer and is rotated on the retainer 7 based on a rolling operation of the balls 73, so that the container storing member 5 is rotatable on the casing lid body 4.

The container storing member 5 is designed to store the container body 8a of the food container. A plurality of container fixtures 55 are formed on an upper surface of the container storing member 5 in multiple pairs symmetrically facing one another for supporting both inner sides of an entrance portion in a state that they are inserted into an inner side of the entrance when the container body 8a is made upside down for stably stacking and storing the container body 8a. As shown in Figure 1, two pairs of container fixtures 55a among four container fixtures 55 have L-shaped flat cross section surfaces, and the remaining two pairs of the container fixtures 55b have arc-shaped flat cross section surfaces.

Here, the L-shaped container fixtures 55a are capable of stably supporting the container body 8a having a rectangular cross section, and the arc-shaped container fixtures 55b are capable of stably supporting the container body 8a having a circular cross section.

Each pair of container fixtures 55 may be integrally formed on the upper surface of the container storing member 5 or may be formed separately from the container support member 5 in an assembling type.

In addition, the bottom surface of the container storing ember 5 is formed of a curved surface that is getting lower and lower in the direction from the center portion to the circumferential portion. A support protrusion 56 is formed at the outer sides of both ends of the container fixture of one side positioned at a circumferential portion among each pair of the container fixtures 55 for supporting one side of an entrance of the container body 8a. Therefore, the container body 8a of which entrance surrounds each pair of the container fixture 55 has a smooth curved shape with an upper surface of the container storing member 5 being smoothly curved downwards in a direction from the center to the outer circumferential portion. However, as shown in Figure 6, one side of the entrance of the container body 8a is supported by the support protrusion 56 in a horizontal shape, so that a plurality of container bodies 8a can be stacked in a vertical shape and are stored.

A handle 33 is formed at a front surface of the lid storing box 3. A lid 8b of the food container is stored in a storing space of the interior. A partition 34 is formed for partitioning the storing space into two parts as shown in Figure 5 for aligning the lids 8b stored in the storing space of the lid storing box 3 in two rows. The partition 34 is detachable and is formed in an assembling type.

In addition, an escape prevention protrusion 48 is protruded downwards from a lower side of the concave portion 43 of the casing lid body 4 with a rear upper end of the lid storing box 3 being caught by the same for preventing the lid storing box 3 from being fully escaped when opening the lid storing box 3.

The operation of the present invention will be described.

The food container storing rack 1 according to the present invention is installed at an upper side of a cooking stand in which a kitchen sink is installed or is simply placed on a shelf or a storing unit installed above the cooking stand, for thereby storing food containers. The rack 1 may be used for storing food containers without lids, but may be well adapted to store the food containers formed of the container bodies 8a capable of storing foods therein, and lids 8b capable of sealing the container body.

When storing the food containers formed of the container body 8a and the lid 8b, the container body 8a and the lid 8b are separated and separately stored in the container storing member 5 and the lid storing box 3. As shown in Figures 5 and 6, in the case of the lid 8b, the lids are stacked in the storing space of the lid storing box 3 engaged into the casing body 2 like a drawer type, so that a larger number of the lids 8b can be stored. In the case of the container body 8a, they are made upside down and are stored in each pair of the container fixtures 55. In this case, when each pair of the container fixtures formed on the upper surface of the container storing member 5 are formed in a L-shape, as shown in Figure 5, the container bodies 8a having rectangular cross sections are stacked and stored. As shown in Figure 1, in the case that the L-shaped container fixture 55a and the arc-shaped container fixture 55b are provided on the upper surface of the container supporting member 5, the container bodies 8a having rectangular cross sections are made upside down and are stacked and stored in the L-shaped container fixture 55a in a stacked construction, and the container bodies 8a having the circular cross sections are made upside down and are stacked and stored in the arc-shaped container fixture 55b in a stacked construction.

Therefore, when the container bodies 8a are made upside down and are stacked on the upper surface of the container storing member 5, since the container bodies 8a stacked from the upper sides are stacked like surrounding the container bodies stacked in the lower sides, so that it is possible to stack and store a large number of the container bodies 8a.

Since the container bodies 8a are stacked in a vertical shape with an inserted shape, it is possible to stably stack a multiple number of the container bodies 8a in a pair of the container fixtures 55. In addition, each lid 8b separated from the container body 8a is sequentially stacked and stored in the lid storing box 3 engaged into the casing body 2 like a drawer, so that the lids cannot be lost.

In addition, when a user wants to take out a certain one container body 8a among the multiple container bodies 8a stacked and stored in the storing rack 1, the user simply rotates the container storing member 5 in a certain direction, so that the container bodies 8a stacked and stored in each pair of the container fixtures 55 are rotated, whereby the user can easily find out a desired container body and can take out the same. The lid 8b matching with the taking-out container body 8a is searched among the lids 8b stored in the storing space by opening the lid storing box 3 and is taken out.

As described above, when storing the food container formed of a container body and a lid in a set, the container body and the lid are separated, and the container body is made upside down and is stored in the container storing member. In this case, multiple container bodies may be made upside down and then may be stacked and stored. The lids separated from the container bodies are aligned in the lid storing box engaged into the casing body like a drawer, so that it is possible to effectively store multiple food containers. In addition, when taking out one container body from the multiple container bodies stacked and stored in the rack, it is needed to rotate the container storing member for thereby fining out a desired one. Therefore, it is easy to take out the same. It is possible to effectively prevent the lids from being lost by storing the same in the lid storing box. It is easy to take out a desired one lid from the lid storing box. Multiple container bodies and lids can be easily and quickly taken out from the rack.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A rack for storing food containers, comprising:
an empty casing body with an upper side and one side of the same being opened;
a lid storing box that is slidably engaged at the casing body and is inserted or withdrawn into/from one opened side of the casing body like a drawer for storing the lids of the food containers;
a casing lid body that opens and closes the lid storing box and covers an opened upper side of the casing body; and
a container storing member that is engaged at an upper side of the casing lid body for storing at least one container body of the food container in a vertically stacked state and is formed in multiple rows.

2. The rack of claim 1, wherein inner and outer guide protrusions are protruded in parallel from both sides of a bottom upper surface of the casing body for forming a moving groove in a direction that the lid storing box is opened and closed; and a stopper protrusion is formed at a front end of the outer guide protrusion; a rail protrusion is protruded from both sides of a bottom lower surface of the lid storing box and is inserted between the inner and outer guide protrusions and slide along the moving groove; and an escape prevention protrusion that is protruded near a rear end of the rail protrusion and is engaged with the stopper protrusion.

3. The rack of claim 1 or 2, wherein said container storing member is rotatable on the casing lid body.

4. The rack of any of claims 1 through 3, wherein said container storing ember is rotatably supported by a plurality of balls inserted into a retainer with equivalent angles and shapes installed at a fixture fixed at an upper surface of the casing lid.

5. The rack of claim 4, wherein said fixture is fixed by a plurality of engaging protrusions protruded upwards from an upper surface of a concave part in a state that a circular protrusion protruded from a lower side of the same is inserted in a horizontal shape between the inner and outer circular protrusions protruded upwards from the concave part formed downwards at the center of the casing lid body, and inner and outer circular protrusions are formed at an upper surface of the fixture for forming a retainer receiving circular groove for receiving the retainer.

6. The rack of any of claims 1 through 5, wherein a cylindrical part is protruded downwards from the center of a lower side of the container storing member, and a plurality of assembling protrusions are formed at a lower side of the cylindrical part and are rotatably inserted into an assembling hole formed at the center of the fixture, and a circular rotation member that is supported by a plurality of balls engaged at the retainer at a surrounding portion of the cylindrical part for thereby guiding a rotational operation of the container storing member.

7. The rack of any of claims 1 through 6, wherein said container fixtures formed in a pair are formed at an upper surface of the container storing member in multiple pairs symmetrically at an inner side of the entrance of the container body for thereby fixing the container bodies when the container bodies of the food containers are made upside down and are stored.

8. The rack of any of claims 1 through 7, wherein said container fixtures formed at an upper surface of the container storing member in multiple pairs are formed in a L-shape or an arc shape for effectively fixing the container bodies of the food containers having circular cross sections or rectangular sections.

9. The rack of any of claims 1 through 8, wherein an escape prevention protrusion is protruded from a lower side of the casing lid body for preventing a lid storing box from being escaped from the casing body when opening the lid storing box.
